# EUROPEAN PATENT SPECIFICATION

(11) **EP 3 005 854 B1**
(45) Date of publication and mention of the grant of the patent: **08.05.2019**
(21) Application number: 14187804.1
(22) Date of filing: 06.10.2014
(51) Int. Cl.: A01F 15/07, A01F 15/10

(54) **A round baler for forming a bale from a crop product and a method**
Rundballenpresse zur Formung eines Ballens aus einem Ernteprodukt und Verfahren
Presse à balles rondes de formation d'une balle à partir d'un produit de récolte et procédé

(43) Date of publication of application: 13.04.2016
(73) Proprietor: Kverneland Group Ravenna S.r.l., 48026 Russi (RA) (IT)
(72) Inventor: Varley, Seamus, Dublin (IE)
(74) Representative: Bittner, Thomas L.

(56) References cited:
- EP-A2- 1 062 860
- EP-A2- 2 689 654
- WO-A1-2013/014291

## Description

The present disclosure relates to a round baler for forming a bale from a crop product and a method.

### Background

A round baler is an agricultural harvesting machine which is used to form round bales of compressed hay or grass materials. It is known to form bales from crop products such as hay, grasses, cereal crops or cotton. It is to be understood that the terms crop products, hay or grass are used interchangeably throughout the specification to describe suitable materials used for forming bales that are found on agricultural land when cotton, cereal crops or grasses are cut.

In practice, when baling, the hay or grass products are cut and then collected by means of a pick up device into a baling chamber. The collected hay or grass is subjected to a winding action within the baling chamber by means of positively driven belts or rollers. The cut hay or grass is wound around itself to form the bale whilst in the chamber.

Many modern round baling devices of the stop / start types, the balers are fitted with feeding rotors that pull, feed and compress the incoming crop from the pickup device through to the bale forming chamber. On occasions the feeding rotor becomes blocked and the protective slip clutch device triggers hence stopping the rotation of the feeding rotor. In order to unblock the feeding rotor many manufacturers fit the round baling machines with what's commonly known as "drop floors". When the rotor becomes blocked, the operator can lower the floor/ chopping unit under the feeding rotor hydraulically and therefore opens the feeding pathway under the rotor considerably. The operator may then turn the machine's PTO back on and the rotor will clear the blocked crop due to the increased feeding pathway under due to the drop floor/ chopping unit dropping down to increase the volume of feeding space.

Document WO 2013 / 014291 A1 discloses a round baler comprising two bale forming chambers providing for a prechamber and a main chamber machine. The standard drop floor unblocking device will only clear the blockage to the one chamber that the feeding rotor is feeding.

Document EP 2 689 654 A2 discloses a round baler provided with a single bale forming chamber. A feeding mechanism feeding the crop into the bale forming chamber is provided with a drop floor device which is configured to be moved into different position with regard to a feeding rotor device. Specifically, the drop floor device may be lower and moved up.

### Summary

It is an object of the present disclosure to provide a round baler for forming a bale from a crop product having improved feeding of the crop product to the bale forming chambers.

A round baler for forming a bale from a crop product according to claim 1 is provided. Embodiments are disclosed in the dependent claims.

According to an aspect, a round baler for forming a bale from a crop product is provided. The round baler comprises a first bale forming chamber provided with a first bale forming mechanism, a second bale forming chamber provided with a second bale forming mechanism, and a feeding mechanism, comprising a pickup device, a feeding rotor device, and a drop floor unit. A feeding path is provided between the pickup device and the first and second chamber. The drop floor unit comprises a drop floor device and a crop deflector device pivotably connected to the drop floor device. For adjusting the size of the feeding path at least in a feeding path section adjacent to the drop floor device, the drop floor device is pivotable between a plurality of different positions in each of which the feeding path section is open for conveying the crop through the feeding path section.

According to another aspect, a method for unblocking a feeding path in a round baler is provided. The method comprises:
- providing a round baler a first bale forming chamber provided with a first bale forming mechanism, a second bale forming chamber provided with a second bale forming mechanism, and a feeding mechanism, having a pickup device, a feeding rotor device, and a drop floor unit,
- picking up a crop product by the pickup device of the round baler,
- conveying the crop product along a feeding path provided between the pickup device and the first and second bale forming chamber, and
- unblocking blockage of the feeding path by increasing the size of the feeding path at least in a feeding path section adjacent to the drop floor unit comprising a drop floor device and a crop deflector device pivotably connected to the drop floor device, wherein, for unblocking, the drop floor device is lowered from an operation position to an unblocking position, the operation position and the unblocking being positions in which the feeding path section is open for conveying the crop through the feeding path section.

The crop deflector plate may be pivotable around a hinge point provided at the drop floor device.

The first and second chamber may also be referred to as prechamber and main chamber, respectively. The round baler may be of the non-stop baler type.

The crop feeding path may be provided with a plurality of sub-feeding paths differing from each other by having different feeding path sub-sections separated from each other.

The different positions to which the drop floor device may be relocated may be feeding position adapted to feed the crop through the feeding path section to at least one of the chambers.

The crop deflector device may comprise a crop deflector plate pivotably attached to the drop floor device.

The adjusting of the size of the feeding path section may provide for narrowing / widening the feeding path within the section. Adjustment of the size of the feeding path section may comprise lowering the drop floor device from an upper position to one or more lowered positions by rotation.

The drop floor device may be relocatable into an anti-blinding position adapted to free the crop feeding path from blockage. Relocation may be done by rotation of the drop floor device. The anti-blinding position may be an unblocking lowered position (anti-blockage position) of the drop floor device. The anti-blinding position may be adapted to free the crop feeding path after blockage of the feeding path was observed, e.g. by the machine operator. The anti-blinding position may be adapted to for freeing sections of different sub-feeding paths. The anti-blinding position may be a position of the plurality of different (open) positions of the drop floor device. The drop floor unit as such or in combination with additional components of the round baler may provide for a drop floor unblocking system that will unblock the feeding path to both chambers in order to maintain a simplistic and reliable crop feeding.

The crop deflector device may be pivotable independently of a relocation of the drop floor device. Pivoting of the drop floor device may relocate the crop deflector device as well. Relocation of the drop floor device, e.g. by pivoting, may enforce adjustment of the crop deflector device, thereby, providing a collective / common relocation, e.g. a rotation.

The drop floor device may be pivotably attached to a hinge provided on a baler chassis. The hinge may be connected to the pick-up device.

The crop deflector device may be provided at a rear end of the drop floor device.

The crop deflector device may provide for an extension of the drop floor device. A rear side extension may be provided, the rear side being the side where, with respect to the chambers, a proximal end of the drop floor device is located.

The crop deflector device may be pivotable into a first and second position adapted to feed the crop the first bale forming chamber and the second bale forming chamber, respectively. A plurality of positions may be provided the positions of the crop deflector device being adapted to guide the crop picked up to one of the chambers.

The feeding path section may be located adjacent to the feeding rotor. The feeding rotor may be located on one side and the drop floor device on the opposite side of the feeding path section. Widening of the size of the feeding path section may increase the distance between a rotor axis of the feeding rotor and the drop floor device.

The drop floor device may be indirectly pivotable by applying an actuating force provided by an actuator device to the crop deflector device. For example, a hydraulic actor may be provided.

The drop floor unit may comprise a cutting device. The cutting device may be provided on a side of the drop floor device facing the feeding path section. The cutting device may be projecting into the feeding path section adjacent to the drop floor device

With regard to the method, while the drop floor device is lowered for unblocking the crop deflector device may be kept in its relative position with respect to the drop floor device. In an alternative, in the process of lowering the drop floor device the crop deflector device may change its relative position with regard to the drop floor device, e.g. for providing a wider opening for the feeding path. Changing the relative position of the crop deflector device in relation to the drop floor device may be performed while the drop floor device is lowered and / or after the lowering is finished.

Movement of the crop deflector device may be a forced movement caused by the relocation (lowering, moving up) of the drop floor device.

The unblocking of the feeding path may comprises unblocking of sub-feeding path to the first bale forming chamber and / or sub-feeding path, the sub-feeding paths being part of the feeding path and being adapted for conveying the crop picked up to the first and the second bale forming chamber, respectively. The feeding path section adjacent to the drop floor unit may be part of all sub-feeding paths making up the feeding path.

The combination of the drop floor device and the crop deflector device alternating in a range of positions around one or more pivoting points is adapted to increase / decrease the cross sectional area of the feeding path which may be made of a plurality of crop feeding pathways (sub-feeding path) to one or more bale forming chambers. The drop floor unit effectively is provided with a multidimensional movement (at least two dimensional) to adapt the cross sectional area to one or more feeding paths. In general, there may be a plurality of movable parts of the drop floor unit, the parts being movable relative to each other and as a unit for adapting the cross section of the feeding path.

Following, further aspects of the round baler are described.

The drop floor unit may be hinged directly behind a pickup reel. It may be hydraulically lowered and raised when required. The drop floor device with the crop deflector device attached to it combined may make up the drop floor unit. The crop deflector device may alternate between at least two positions to divert and deflect crop into the different bale forming chambers. The crop deflector device may move intermittingly between a first and a second position to change the course of the crop feeding pathway so the crop follows at least two distinctive paths to the first bale forming chamber and to the second bale forming chamber.

The drop floor device and the crop deflector device may be adapted to divert crop picked up into either one of the two chambers. The crop deflector device may be pivotably mounted to the rear of the drop floor device and may operate in a pivoting motion independent of the hinged point of the drop floor device itself. Therefore the movement or rotational point of the crop deflector device attached to the rear of the drop floor device is independent of the rotational point of the rotational point of the drop floor device itself.

The deflector device provided with a crop deflector plate has its pivot point and the pivoting point actuators mounted to the drop floor device, the deflector plate and the actuators may move in relation to the drop floor device. The deflector device's primary rotational movement may be defined as a varying angle of movement in relation to the top surface of the drop floor device and a secondary angle of movement that alternates in an angle range depending on the rotational movement of the drop floor device itself. This secondary angle range can be related to the horizontal axis of the round baler as the angle between the deflector device and the drop floor device will remain unchanged if the deflector device remains in one position in relation to the drop floor device. Therefore the total angular movement of the deflector device may be defined as an increasing or decreasing angle of movement in relation to the round baler's horizontal axis defined as the total sum of the primary rotational movement of the deflector device added to or taken away from the total angle of secondary rotational movement of the drop floor device. The primary rotational movement of the deflector device may be comprised of an increasing or a decreasing angle of movement of the deflector device in relation to the machines horizontal axis.

The deflector device and actuators is not attached to any other part of the round baler's structure and the deflector device, actuators and associated pivoting assembly bear 100% of the weight onto the drop floor device which in turn may transfer its own weight to the baler's structure, e.g. a chassis of the round baler or some supporting structure directly attached to the chassis, through the hinge or pivot point and the actuators providing the movement. With this arrangement of the deflector device, actuators and pivoting structure being attached to the drop floor device, the deflector device is a separately moveable unit in itself but moves in relation to the drop floor device and, therefore, the drop floor device and the deflector device components both may move in relation to each other and therefore behave as a combined unit acting and working together but they both move independently of the round baler structure.

Another advantage may relate to their pivoting movement and relative positions in relation to the bale forming chambers. The drop floor unit proposed may have multiple positions to provide increased crop pathways to clear blockages into at least one or more bale forming chambers.

The independent rotation of the crop deflector device in relation to the rotation of the drop floor device may provide one or more crop pathway options for the crop to be fed into one or more bale forming chambers. When the crop is being fed into the first bale forming chamber, the deflector device may be in position one. If there is a blockage in the feeding channel, the drop floor device can be lowered to open the feeding channel into the first bale forming chamber, as the crop deflector device may be attached to the drop floor device, the crop deflector device also lowers with the drop floor device to increase the size of the feeding channel and therefore the crop blockage may be cleared into the first bale forming chamber. The deflector device may then an extension of the drop floor and may extend the crop feeding passage to the rear of the drop floor device.

Therefore, when the crop is being fed into the second bale forming chamber, the crop deflector device may be in a second position. If there is a blockage in the feeding channel, the drop floor device can be lowered to open the feeding channel into the second bale forming chamber, as the crop deflector device is attached to the drop floor device, the crop deflector device also lowers with the drop floor device to increase the feeding channel and therefore the crop blockage may be cleared into the second bale forming chamber.

The movement of the drop floor device opens the crop pathway into either the first bale forming chamber or into the second bale forming chamber and the crop deflector device may alter or switch the crop pathway into the first bale forming chamber or into the second bale forming chamber.

Also, the position and opening of the crop feeding passage of the drop floor device including the crop deflector device when in the unblocking position may be comparable in relation to the amount the different feeding paths open to allow the blockage to either one of or both of the chambers to be cleared.

### Description of further embodiments

Following, further embodiments are described. Reference is made to figures showing:
- Fig. 1: a side elevation of a round baler of the nonstop type,
- Fig. 2: a side elevation of the round baler, wherein a feeding path is shown to be blocked entering a first bale forming chamber,
- Fig. 3: a side elevation of the round baler, crop is being fed into the first bale forming chamber,
- Fig. 4: a side elevation of the round baler, crop is entering and forming a bale in a second bale forming chamber,
- Fig. 5: a side elevation of the round baler, wherein the feeding path is shown to be blocked entering the second bale forming chamber, and
- Fig. 6: a side elevation of the round baler, wherein the feeding path is opened by lowering a drop floor device to clear the blockage into the second bale forming chamber.

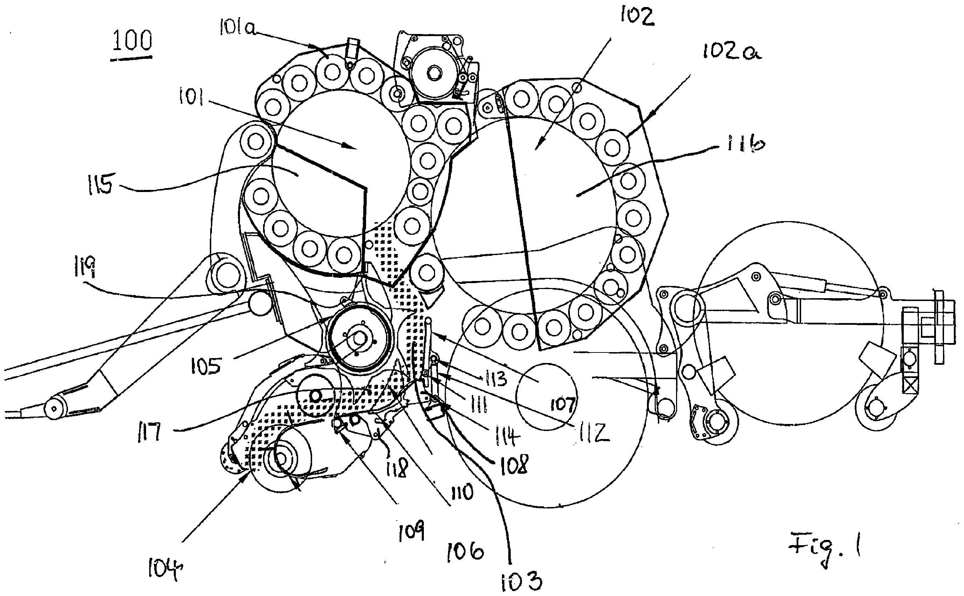

Referring to Fig. 1, 2 and 3 a round baler 100 for forming a round bale from a crop product is shown in a side elevation. The round baler 100 depicted is of the non-stop baler type.

According to Fig. 1 to 3, the round baler is provided with a first and a second bale forming chamber 101, 102. A feeding path 103 is provided for feeding a crop product picked up to the first and second bale forming chamber 101, 102. The feeding path 103 extends at least between a pickup device 104 and the first and second bale forming chamber 101, 102. There may be multiple sub-feeding paths differing from each other by having different feeding path sections separated from each other. The first and second bale forming chamber 101, 102 are provided with a bale forming mechanism 101a, 102a.

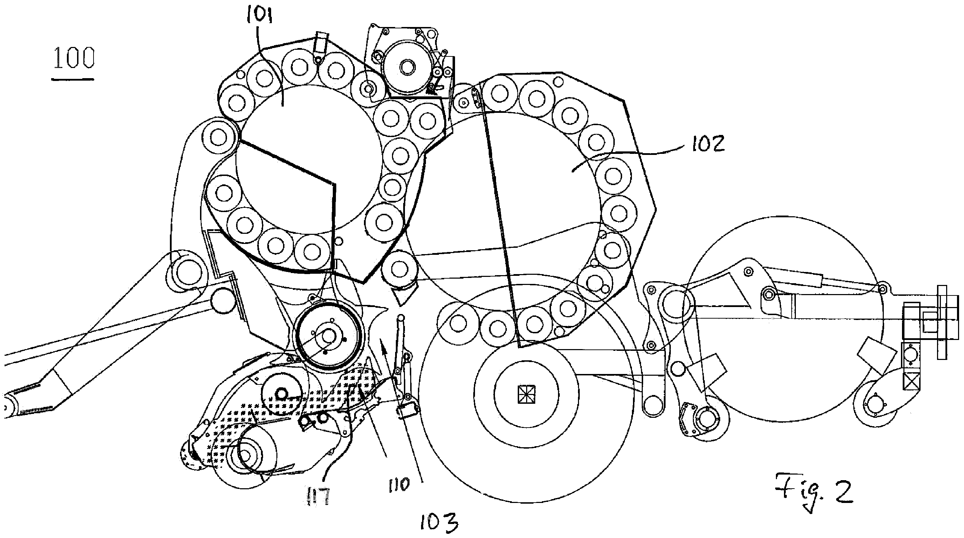

Fig. 2 shows a side elevation of the round baler 100. The crop is being fed into the first bale forming chamber 101. The feeding path 103 is shown to be blocked entering the first bale forming chamber 103. Along the feeding path 103, the crop is fed from the pickup device 104 through a feeding rotor 105 over a drop floor device 106 feeding up into the first bale forming chamber 101.

In Fig. 1, the crop is fed into the first bale forming chamber 101 so therefore in this position, the drop floor device 106 is in an upper position which may also be referred to as closed position, although being a position allowing for conveying the crop through. A crop deflector device 107 pivotably attached to a rear side 108 of the drop floor device 106 is in an up position for directing crop into the first bale forming chamber 101. The drop floor device 106 has a pivoting point 109. In the embodiment shown, a cutting device 110 is provided to the drop floor device 106. At the rear side 108 of the drop floor device 106, the deflector device 107 is pivoted through pivot point 111 and is moved by actuators 112, through pivot points 113, 114.

The first bale forming chamber101 is located to the front of the second bale forming chamber 102. In the first bale forming chamber 101 a bale 115 is produced, and this bale is transferred to the second bale forming chamber 102 for completion. A completed bale 116 is produced and expelled finally.

The drop floor device 106 is provided adjacent to a feeding path section 117 located at least partially between the drop floor device 106 and the feeding rotor 105.

Fig. 2 illustrates when the feeding path 103 becomes blocked, e.g. in the feeding path section 117, and the PTO (commonly known as "Power Take Off') slip clutch would engage automatically. In order to reengage the drive line again, the feeding path 103 must be increased in size in order to make it possible for the PTO drive line clutch to be reengaged and the blocked crop to be fed through into one of two bale forming chambers 101, 102. In Fig. 2, the drop floor device 106 is in the upper position for the feeding of the crop and the crop deflector device is in a position which indicates crop being channelled or diverted into the first bale forming chamber 101.

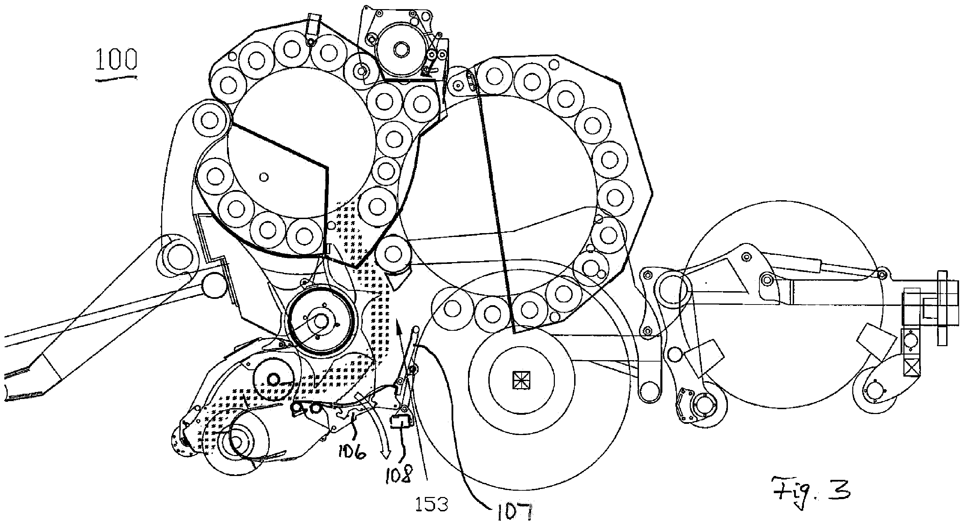

Fig. 3 shows the drop floor device 106 lowering down and increasing the size of the crop feeding path or channel 103. Also significant in this sectional drawing is the crop deflector device 107 being provided as deflector plate in the embodiment shown remains in position which is an up position. In this up position in relation to the drop floor device 106, crop is diverted into the first bale forming chamber 101 even though the drop floor device 106 is in the lowered unblocking state.

The drop floor device 106 and the crop deflector device 107 are components of a drop floor unit 118.

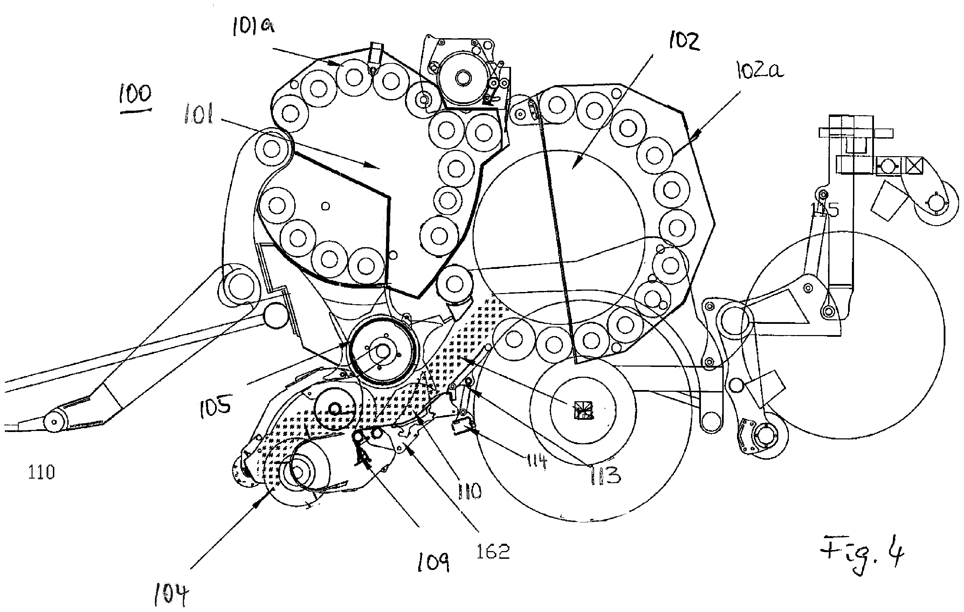

Fig. 4, 5 and 6 illustrate the round baler 100. A process of the unblocking of crop while feeding into the second bale forming chamber 102 is depicted.

In Fig. 4 as per Fig. 1 to 3 the drop floor device 106 is in the same upper position in order to allow crop to feed through. Notably in this Fig. 4 in comparison to Fig. 1 to 3 the crop deflector device 107 attached to the rear side 108 of the drop floor device 107 is in a position which denotes the drop floor device 106 is in a predefined position to feed crop through the crop feeding channel 103 into the second bale forming chamber 102.

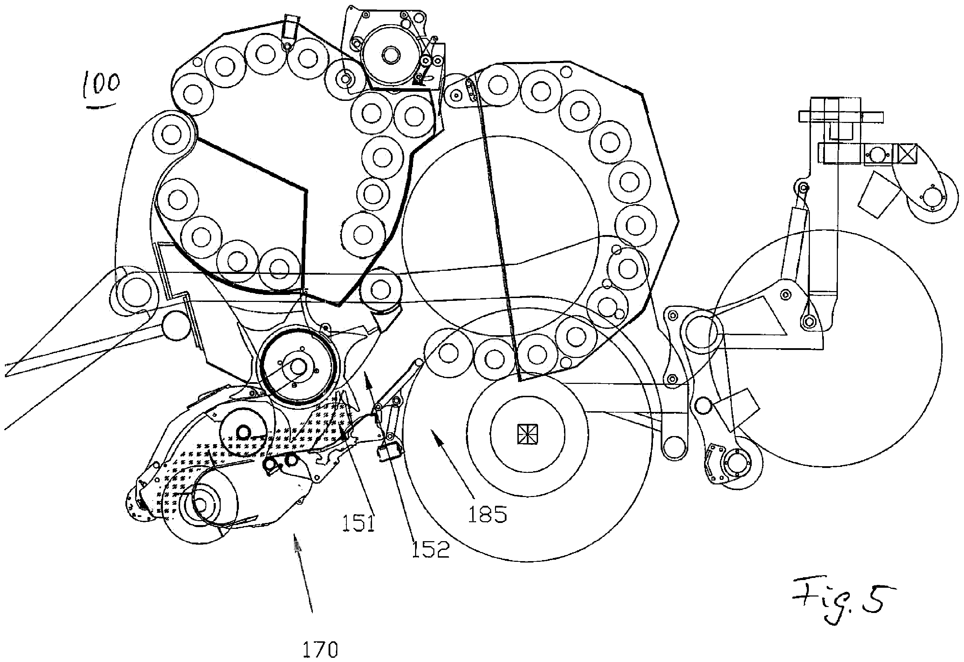

Fig. 5 illustrates when a blockage occurs, the drop floor device 106 is in the second bale forming chamber 102 feeding position. A feeding rotor scraper unit 119 is also in a down position to scrape crop from the feeding rotor 105 as the crop leaves the feeding rotor 105 and enters the second bale forming chamber 102.

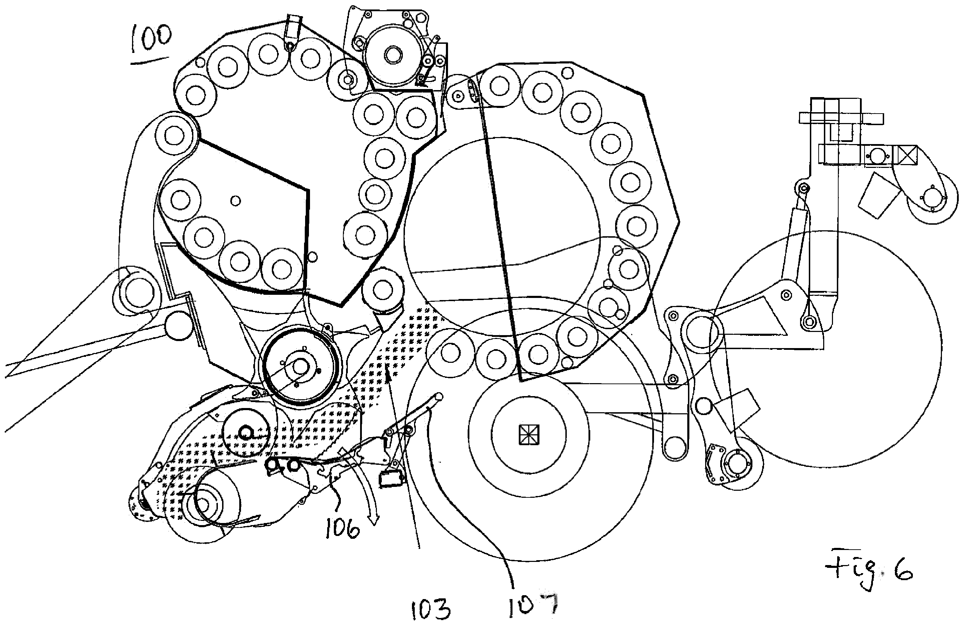

Fig. 6 demonstrates the process of unblocking the feeding path 103, especially the feeding path section 117 adjacent to the drop floor device 106, to the second bale forming chamber 102 but also shows the relative positions of the drop floor unit components, namely the drop floor device 106 and the crop deflector device 107. The drop floor device 106 rotates around the hinge or pivoting point 109 which in turn moves the crop deflector device 107 into a down position. As a result the size of the crop feeding channel 103 is increased so the operator can reengage the tractors PTO to start to drive the round baler 100 again. As a result of lowering the drop floor device 106, the drop floor device 106 is in an unblocking, lowered position, and the crop deflector device 107 remains in the second bale forming chamber 102 feeding position of so the blocked feeding path 103 may be unblocked successfully.

## Claims

1. A round baler (100) for forming a bale from a crop product, comprising
- a first bale forming chamber (101) provided with a first bale forming mechanism (101a),
- a second bale forming chamber (102) provided with a second bale forming mechanism (102a), and
- a feeding mechanism, comprising a pickup device (104), a feeding rotor device (105), and a drop floor unit, the drop floor unit comprising a drop floor device (106) and a crop deflector device (107) pivotably connected to the drop floor device, and
- a feeding path (103) provided between the pickup device (104) and the first and second bale forming chamber (101, 102), **characterized in that**
- for adjusting the size of the feeding path (103) at least in a feeding path section adjacent to the drop floor device, the drop floor device (106) is pivotable between a plurality of different positions in each of which the feeding path section is open for conveying the crop through the feeding path section, and
- the crop deflector device (107) has its pivot point (111) and pivoting actuators (112) mounted to the drop floor device, the deflector device (107) and its pivoting actuators (112) being free of attachment to any other part of the round baler's structure.

2. Round baler according to claim 1, **wherein** the drop floor device (106) is relocatable into an anti-blinding position adapted to free the crop feeding path (103) from blockage.

3. Round baler according to claim 1 or 2, **wherein** the crop deflector device (107) is pivotable independently of a relocation of the drop floor device.

4. Round baler according to any claim of the preceding claims, **wherein** the drop floor device (106) is pivotably attached to a hinge (109) provided on a baler chassis.

5. Round baler according to any claim of the preceding claims, **wherein** the crop deflector device (107) is provided at a rear end (108) of the drop floor device (106).

6. Round baler according to any claim of the preceding claims, **wherein** the crop deflector device (107) provides for an extension of the drop floor device (106).

7. Round baler according to any claim of the preceding claims, **wherein** the crop deflector device (107) is pivotable into a first and second position adapted to feed the crop the first bale forming chamber (101) and the second bale forming chamber (102), respectively.

8. Round baler according to any claim of the preceding claims, **wherein** the feeding path section is located adjacent to the feeding rotor (105).

9. Round baler according to any claim of the preceding claims, **wherein** the drop floor device (106) is indirectly pivotable by applying an actuating force provided by an actuator device to the crop deflector device.

10. Round baler according to any claim of the preceding claims, **wherein** the drop floor unit comprises a cutting device (110).

11. Round baler according to claim 10, **wherein** the cutting device (110) is provided on a side of the drop floor device (106) facing the feeding path section.

12. Round baler according to claim 10 or 11, **wherein** the cutting device (110) is projecting into the feeding path section adjacent to the drop floor device (106).

13. A method for unblocking a feeding path in a round baler, comprising
- providing a round baler (100) with a first bale forming chamber (101) provided with a first bale forming mechanism (101a), a second bale forming chamber (102) provided with a second bale forming mechanism (102a), and a feeding mechanism, having a pickup device (104), a feeding rotor device (105), and a drop floor unit, the drop floor unit comprising a drop floor device (106) and a crop deflector device (107) pivotably connected to the drop floor device,
- picking up a crop product by the pickup device (104) of the round baler, and
- conveying the crop product along a feeding path (103) provided between the pickup device and the first and second bale forming chamber,
**characterized by** unblocking blockage of the feeding path (103) by increasing the size of the feeding path at least in a feeding path section adjacent to the drop floor unit comprising a drop floor device (106) and a crop deflector device (107) pivotably connected to the drop floor device, wherein, for unblocking, the drop floor device (106) is lowered from an operation position to an unblocking position, the operation position and the unblocking being positions in which the feeding path section is open for conveying the crop through the feeding path section, wherein further the crop deflector device (107) has its pivot point (111) and pivoting actuators (112) mounted to the drop floor device (106), the deflector device (107) and its pivoting actuators (112) being free of attachment to any other part of the round baler's structure.

## Patentansprüche

1. Rundballenpresse (100) zum Bilden eines Ballens aus einem Erntegut, umfassend
- eine erste Ballenformungskammer (101), die mit einem ersten Ballenformungsmechanismus (101a) versehen ist,
- eine zweite Ballenformkammer (102), die mit einem zweiten Ballenformungsmechanismus (102a) versehen ist, und
- einen Zuführmechanismus, umfassend eine Aufnahmevorrichtung (104), eine Zuführrotorvorrichtung (105) und eine Fallbodeneinheit, wobei die Fallbodeneinheit eine Fallbodenvorrichtung (106) und eine Erntegutablenkvorrichtung (107) umfasst, die schwenkbar mit der Fallbodenvorrichtung verbunden ist, und
- einen Zuführweg (103), der zwischen der Aufnahmevorrichtung (104) und der ersten und zweiten Ballenformungskammer (101, 102) vorgesehen ist,
**dadurch gekennzeichnet, dass**
- zum Einstellen der Größe des Zuführweges (103) mindestens in einem an die Fallbodenvorrichtung angrenzenden Zuführwegabschnitt, die Fallbodenvorrichtung (106) zwischen mehreren verschiedenen Positionen schwenkbar ist, in denen der Zuführwegabschnitt jeweils offen ist, um das Erntegut durch den Zuführwegabschnitt zu befördern, und
- der Schwenkpunkt (111) und Schwenkstellglieder (112) der Erntegutablenkvorrichtung (107) an der Fallbodenvorrichtung montiert sind, wobei die Ablenkvorrichtung (107) und ihre Schwenkstellglieder (112) frei von Befestigungen an jedem anderen Teil der Rundballenpressenkonstruktion sind.

2. Rundballenpresse nach Anspruch 1, wobei die Fallbodenvorrichtung (106) in eine Antiblockierstellung bewegbar ist, die eingerichtet ist, um den Erntegutzuführweg (103) von Verstopfungen zu befreien.

3. Rundballenpresse nach Anspruch 1 oder 2, wobei die Erntegutablenkvorrichtung (107) unabhängig von einer Bewegung der Fallbodenvorrichtung schwenkbar ist.

4. Rundballenpresse nach einem beliebigen Anspruch der vorhergehenden Ansprüche, wobei die Fallbodenvorrichtung (106) schwenkbar an einem Scharnier (109) befestigt ist, das an einem Pressenfahrgestell vorgesehen ist.

5. Rundballenpresse nach einem beliebigen Anspruch der vorhergehenden Ansprüche, wobei die Erntegutablenkvorrichtung (107) an einem hinteren Ende (108) der Fallbodenvorrichtung (106) bereitgestellt ist.

6. Rundballenpresse nach einem beliebigen Anspruch der vorhergehenden Ansprüche, wobei die Erntegutablenkvorrichtung (107) eine Verlängerung der Fallbodenvorrichtung (106) bereitstellt.

7. Rundballenpresse nach einem beliebigen Anspruch der vorhergehenden Ansprüche, wobei die Erntegutablenkvorrichtung (107) in eine erste und zweite Position schwenkbar ist, die geeignet sind, das Erntegut der ersten Ballenformungskammer (101) beziehungsweise der zweiten Ballenformungskammer (102) zuzuführen.

8. Rundballenpresse nach einem beliebigen Anspruch der vorhergehenden Ansprüche, wobei der Zuführwegabschnitt angrenzend an den Zuführrotor (105) angeordnet ist.

9. Rundballenpresse nach einem beliebigen Anspruch der vorhergehenden Ansprüche, wobei die Fallbodenvorrichtung (106) durch Ausüben einer von einer Betätigungsvorrichtung bereitgestellte Betätigungskraft auf die Erntegutablenkvorrichtung indirekt schwenkbar ist.

10. Rundballenpresse nach einem beliebigen Anspruch der vorhergehenden Ansprüche, wobei die Fallbodeneinheit eine Schneidvorrichtung (110) umfasst.

11. Rundballenpresse nach Anspruch 10, wobei die Schneidvorrichtung (110) auf einer dem Zuführwegabschnitt zugewandten Seite der Fallbodenvorrichtung (106) bereitgestellt ist.

12. Rundballenpresse nach Anspruch 10 oder 11, wobei die Schneidvorrichtung (110) in den Zuführwegabschnitt neben der Fallbodenvorrichtung (106) hervorsteht.

13. Verfahren zum Entsperren eines Zuführweges in einer Rundballenpresse, umfassend
- das Bereitstellen einer Rundballenpresse (100) mit einer ersten Ballenformungskammer (101), die mit einem ersten Ballenformungsmechanismus (101a) versehen ist, einer zweiten Ballenformungskammer (102), die mit einem zweiten Ballenformungsmechanismus (102a) versehen ist, und einem Zuführmechanismus mit einer Aufnahmevorrichtung (104), einer Zuführrotorvorrichtung (105) und einer Fallbodeneinheit, wobei die Fallbodeneinheit eine Fallbodenvorrichtung (106) und eine Erntegutablenkvorrichtung (107) umfasst, die schwenkbar mit der Fallbodenvorrichtung verbunden ist,
- das Aufnehmen eines Ernteguts durch die Aufnahmevorrichtung (104) der Rundballenpresse, und
- das Befördern des Ernteguts entlang eines Zuführweges (103), der zwischen der Aufnahmevorrichtung und der ersten und zweiten Ballenformungskammer vorgesehen ist,
**gekennzeichnet durch** das Entsperren von Blockaden des Zuführweges (103) durch Vergrößern der Größe des Zuführweges mindestens in einem an die Fallbodeneinheit angrenzenden Zuführwegabschnitt, umfassend eine Fallbodenvorrichtung (106) und eine mit der Fallbodenvorrichtung schwenkbar verbundene Erntegutablenkvorrichtung (107),
wobei die Fallbodenvorrichtung (106) zum Entsperren von einer Betriebsposition in eine Entsperrposition abgesenkt wird, wobei die Betriebsposition und die Entsperrung Positionen sind, in denen der Zuführwegabschnitt zum Befördern des Ernteguts durch den Zuführwegabschnitt offen ist, wobei ferner der Schwenkpunkt (111) und Schwenkstellglieder (112) der Erntegutablenkvorrichtung (107) an der Fallbodenvorrichtung (106) montiert sind, wobei die Ablenkvorrichtung (107) und ihre Schwenkstellglieder (112) frei von Befestigungen an jedem anderen Teil der Rundballenpressenkonstruktion sind.

## Revendications

1. Presse à balles rondes (100) pour former une balle à partir d'un produit de récolte, comprenant
- une première chambre de formation de balles (101) dotée d'un premier mécanisme de formation de balle (101a),
- une deuxième chambre de formation de balles (102) dotée d'un deuxième mécanisme de formation de balles (102a), et
- un mécanisme d'alimentation comprend un dispositif de ramassage (104), un dispositif à rotor d'alimentation (105) et une unité de descente au sol, l'unité de descente au sol comprenant un dispositif de descente au sol (106) et un dispositif déflecteur de récolte (107) relié de manière pivotante au dispositif de descente au sol, et
- un trajet d'alimentation (103) prévu entre le dispositif de ramassage (104) et les première et deuxième chambre(s) (101, 102),
**caractérisée en ce que**
- pour ajuster la taille du trajet d'alimentation (103) au moins dans une section de trajet d'alimentation adjacente au dispositif de descente au sol, le dispositif de descente au sol (106) peut pivoter entre une pluralité de positions différentes dans chacune desquelles la section de trajet d'alimentation est ouverte pour transporter la récolte à travers la section de trajet d'alimentation, et
- le dispositif déflecteur de récolte (107) a son point d'articulation (111) et des déclencheurs d'articulation (112) montés sur le dispositif de descente au sol, le dispositif déflecteur (107) et ses déclencheurs d'articulation (112) étant libres de fixation en n'importe quelle autre partie de la structure de la presse à balles rondes.

2. Presse à balles rondes selon la revendication 1, dans laquelle le dispositif de descente au sol (106) peut être relogé dans une position anti-aveuglement adaptée pour libérer le trajet d'alimentation (103) de récolte d'un blocage.

3. Presse à balles rondes selon la revendication 1 ou 2, dans laquelle le dispositif déflecteur de récolte (107) peut pivoter indépendamment d'un relogement du dispositif de descente au sol.

4. Presse à balles rondes selon l'une des revendications précédentes, dans laquelle le dispositif de descente au sol (106) est fixé en articulation à une charnière (109) prévue sur un châssis de presse.

5. Presse à balles rondes selon l'une des revendications précédentes, dans laquelle le dispositif déflecteur de récolte (107) est prévu à une extrémité arrière (108) du dispositif de descente au sol (106).

6. Presse à balles rondes selon l'une des revendications précédentes, dans laquelle le dispositif déflecteur de récolte (107) fournit une extension du dispositif de descente au sol (106).

7. Presse à balles rondes selon l'une des revendications précédentes, dans laquelle le dispositif déflecteur de récolte (107) peut pivoter dans une première et une deuxième position adaptées pour alimenter la récolte à la première chambre de formation de balles (101) et à la deuxième chambre de formation de balles (102), respectivement.

8. Presse à balles rondes selon l'une des revendications précédentes, dans laquelle la section de trajet d'alimentation est située adjacent eau rotor d'alimentation (105).

9. Presse à balles rondes selon l'une des revendications précédentes, dans laquelle le dispositif de descente au sol (106) peut pivoter indirectement en appliquant une force de déclenchement fournie par un dispositif déclencheur au dispositif déflecteur de récolte.

10. Presse à balles rondes selon l'une des revendications précédentes, dans laquelle le dispositif de descente au sol comprend un outil de coupe (110).

11. Presse à balles rondes selon la revendication 10, dans laquelle l'outil de coupe (110) est prévu sur un côté du dispositif de descente au sol (106) faisant face à la section de trajet d'alimentation.

12. Presse à balles rondes selon la revendication 10 ou 11, dans laquelle l'outil de coupe (110) fait saillie dans la section de trajet d'alimentation adjacente au dispositif de descente au sol (106).

13. Procédé de déblocage d'un trajet d'alimentation dans une presse à balles rondes, comprenant :
- de doter une presse à balles rondes (100), d'une première chambre de formation de balles (101) dotée d'un premier mécanisme de formation de balle (101a), d'une deuxième chambre de formation de balles (102) dotée d'un deuxième mécanisme de formation de balles (102a), et d'un mécanisme d'alimentation ayant un dispositif de ramassage (104), d'un dispositif à rotor d'alimentation (105) et d'une unité de descente au sol, l'unité de descente au sol comprenant un dispositif de descente au sol (106) et un dispositif déflecteur de récolte (107) relié de manière pivotante au dispositif de descente au sol, et
- de ramasser un produit de récolte par le dispositif de ramassage (104) de la presse à balles rondes, et
- de transporter le produit de récolte le long d'un trajet d'alimentation (103) prévu entre le dispositif de ramassage et les première et deuxième chambre(s),
**caractérisé par** le déblocage du blocage du trajet d'alimentation (103) en augmentant la taille du trajet d'alimentation au moins dans une section de trajet d'alimentation adjacente à l'unité de descente au sol comprenant un dispositif de descente au sol (106) et un dispositif déflecteur (107) connecté de manière pivotante au dispositif de descente au sol, dans lequel, pour débloquer, le dispositif de descente au sol (106) est abaissé d'une position opérationnelle à une position de déblocage, la position opérationnelle et le déblocage étant des positions dans lesquelles la section de trajet d'alimentation est ouverte pour transporter la récolte à travers la section de trajet d'alimentation, dans lequel en outre le dispositif déflecteur de récolte (107) a son point d'articulation (111) et des déclencheurs d'articulation (112) montés sur le dispositif de descente au sol (106), le dispositif déflecteur (107) et ses déclencheurs d'articulation (112) étant libres de fixation à n'importe quelle autre partie de la structure de la presse à balles rondes.
